# EUROPEAN PATENT APPLICATION

(11) **EP 1 394 663 A1**
(43) Date of publication of application: **03.03.2004**
(21) Application number: 02292098.7
(22) Date of filing: 26.08.2002
(51) Int. Cl.: G06F 1/24

(54) **Appliance with a software reset**

(71) Applicant: Thomson Licensing S.A., 92648 Boulogne Cedex (FR)
(72) Inventor: Lam, Yoke Lin, The Countryside, Singapore 789799 (SG); Tan, Chee Lam, Singapore 730520 (SG); Dumont, Frank, Singapore 269564 (SG)
(74) Representative: Rossmanith, Manfred, Dr.

(57) **Abstract**

The appliance comprises a microcontroller (2) and a key display board with a respective key controller (1). In case of a malfunction of the key controller, not only the key controller is reset, but also a microcontroller by a software reset circuit (3). Both the key controller (1) and the microcontroller (2) are then reset at the same time. The appliance is for example a consumer electronics product comprising digital signal processing circuits for digital video and digital audio contents, e.g. a digital television set or a digital video recorder. In a preferred embodiment, also the circuits for digital video and audio processing are reset in case of a malfunction of the key controller (1).

## Description

The present invention relates to an appliance comprising a microcontroller, a key display board and a respective key controller. Appliances of this kind are used for example in television sets, video recorders and similar consumer electronics products.

Appliances of this kind are usually equipped at the front side with a key display board comprising buttons, via which a user can enter commands for the operation of the appliance. It may comprise also a LED or a small LCD display for providing information about operating modes. The key display board comprises further an infrared receiver for the operation of the appliance with a remote control. The user buttons and the infrared receiver are observed and operated by a key controller, which is a special microcontroller for decoding the respective user commands. The user commands are forwarded then to the microcontroller of the appliance for the operation of the appliance.

It is known that key controllers are sensitive to electrostatic discharging or other kinds of electromagnetic radiation, which may cause a temporary malfunction or a disability of the key controller. It is therefore known to observe the correct operation of the key controller, e.g. by a watchdog circuit, which provides a reset for the key controller, when the operation of the key controller is disabled. This is called software reset, because the reset is provided by a software command signal during the operation of the appliance. Known also is a so-called hardware reset, which is activated, when the switch-on/off button of the appliance is operated. A hardware reset is therefore always activated, when the appliance is switched on.

An appliance with a key controller is known from JP 05-158598 A2, which provides a software reset of the key controller in case of a malfunction. The key controller is coupled with a microcontroller of the appliance, which operates as a watchdog for a monitoring of the key controller. When the key controller does no more respond to the microcontroller in a defined fashion, the microcontroller provides a reset signal to the key controller in a software fashion, for resuming the operation of the key controller. In the signal path of the software reset signal an OR circuit is arranged, via which a hardware reset via an On/Off switch is provided also. Via the On/Off switch, the key controller as well as the microcontroller are reset in case of switching on the appliance.

It is the object of the present invention, to specify an appliance as described above having a high reliability during operation.

This object is achieved by means of the invention as specified in claim 1. Advantageous developments of the invention are disclosed in the subclaims.

The appliance according to the invention comprises a microcontroller, a key display board and a respective key controller. In case of a malfunction of the key controller, not only the key controller is reset, but also a microcontroller by a soft-reset circuit. Both controllers can be reset at the same time. The reliability of the appliance is therefore improved, because electrostatic discharges may not only disable the key controller, but also the main microcontroller of the appliance.

The appliance is for example a consumer electronics product comprising digital signal processing, e.g. a digital television set or a digital video recorder. The appliance therefore comprises further circuits for digital video processing and digital audio processing. In this embodiment, therefore also the circuits for digital video and audio processing are reset in case of a malfunction of the key controller.

In a further embodiment, the appliance comprises a power supply, which provides supply voltages for a stand-by mode and a normal mode of operation. The stand-by mode provides a reduced power consumption, in which only essential circuits are active, for example circuits which are necessary for a timer mode operation or for the operation with the remote control. The supply voltages of the power supply for the ON mode can be switched on and off for switching between ON mode and stand-by mode. According to this embodiment, in case of a malfunction of the key controller the supply voltages for the ON mode are switched on and off, simulating therefore a switching to the stand-by mode and subsequently to the ON mode, and providing therefore a reset for the key controller, and the microcontroller of the appliance, as well as for all of the digital signal processing circuits.

Preferred embodiments of the invention are now explained in more detail with reference to schematic drawings, which show:
- Fig. 1: a circuit arrangement comprising a key controller, a microcontroller and circuitry for a hardware and a software reset;
- Fig. 2: the logic inverter and level converter of the Fig. 1; and
- Fig. 3: an appliance comprising a power supply, a key controller, a microcontroller and digital circuits for providing digital video and audio processing.

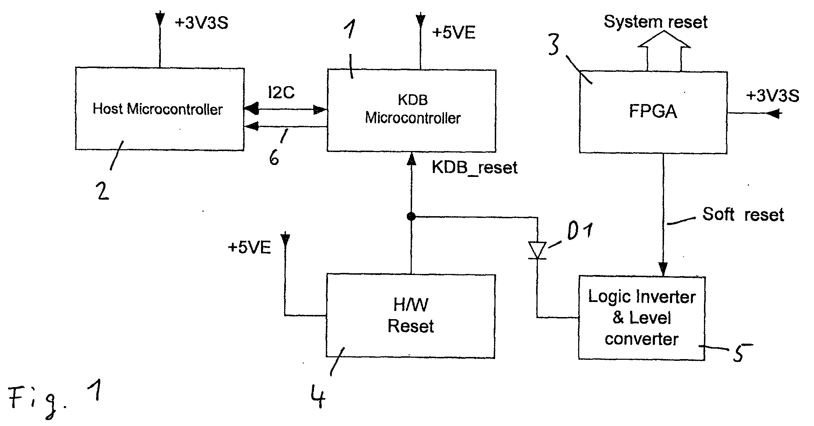

The circuit arrangement as shown in Fig. 1 comprises a key controller 1, which is coupled to a microcontroller 2 of an appliance for an exchange of digital data, for example via an I²c bus. The key controller 1 is a specialized microcontroller being responsible in particular for the operation of the control keys of the appliance as well as for receiving and decoding command signals from a remote control. The key controller 1 is arranged on a key display board at the front side of the appliance, on which also the control keys are arranged. The key display board is usually also equipped with a small display, via which the key controller informs a user about the operating mode of the appliance.

The microcontroller 2 is the central processor (CPU) of the appliance, which operates with software routines being stored in a memory, and which are responsible for the main operating modes of the appliance. The microcontroller 2 may provide for example also electronic program guide operation or videotext operation in a television set or a digital video recorder.

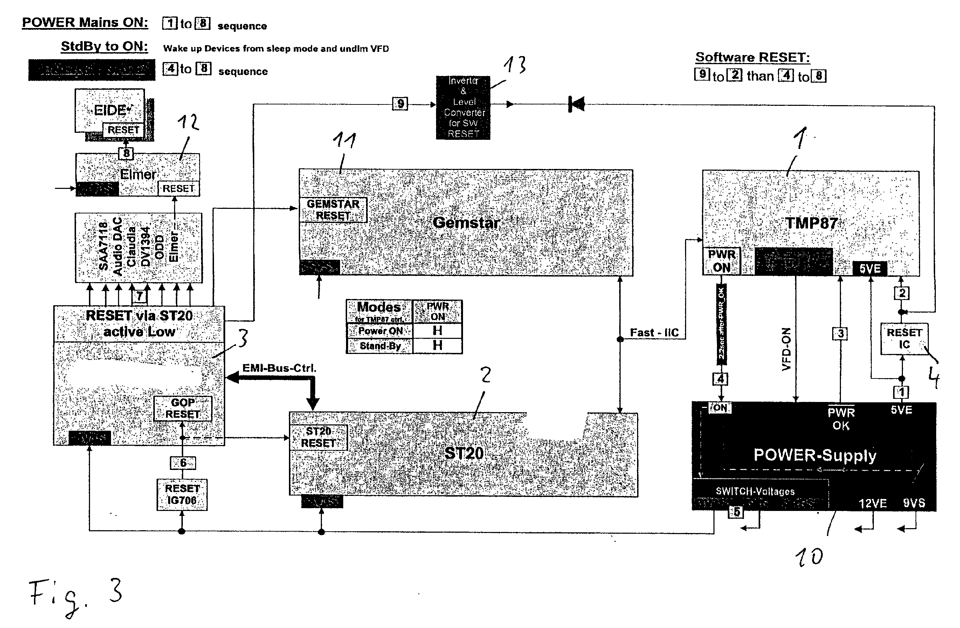

The circuit arrangement comprises further a hardware reset circuit 4, which provides a hard reset for the key controller 1 via a connection 7. The reset circuit 4 is provided for example by a special reset integrated circuit, e.g. a MCP120 from Microchip Technology Inc., which is coupled to the power supply of the appliance for monitoring a supply voltage. In the embodiment as described with regard to Fig. 3, this circuit 4 monitors a supply voltage +5VE for the key controller 1 and provides an inverted reset signal with a delay, the "On" signal for the key controller 1. It holds therefore the key controller 1 in reset until the supply voltage reaches stable operating level.

The circuit arrangement comprises further a digital control circuit 3, which provides the control of digital video streams and a reset and interrupt control for peripheral and central integrated circuits of the appliance. It is for example a programmable gate array (FPGA), designed for operation within a digital video recorder or a DVD player. The control circuit 3 provides therefore a control for all of the digital video and audio signal processing circuits, and provides respective interrupts for changing operating modes, or provides resets in case of a malfunction of the appliance.

A hard-reset can be regarded therefore as a reset being caused by switching on of the appliance, and is therefore included or related to the power supply of the appliance.

In case of a malfunction of the key controller 1, the control circuit 3 provides therefore a software reset for the key controller 1. This reset signal is coupled via a logic inverter and level converter 5 to the line 7, which provides already the hardware reset for the key controller 1. The key controller 1 provides then also a reset for the microcontroller 2 via a line 6.

The hardware reset signal from reset circuit 4 to the key controller 1 is in this embodiment a logical "low" signal. Therefore, for the operation of the key controller 1 the signal on line 7 is "high". The control circuit 3 provides a logical "high" for a software reset in case of a malfunction of the key controller 1. Therefore, a logic inverter 5 and a diode D1 are necessary for coupling the software reset signal of control circuit 3 to line 7 of the hardware reset signal of reset circuit 4. The logic inverter provides further a level concerting, because the control circuit 3 operates with a 3.3V supply voltage, and the key controller 1 with a supply voltage of 5V.

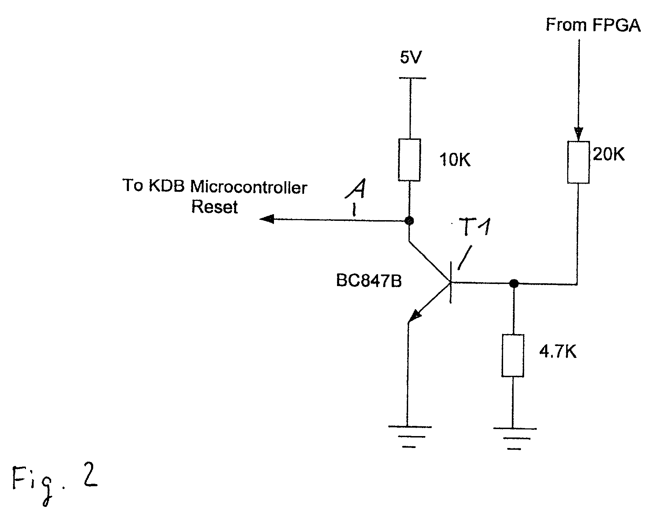

In Figure 2 the logic inverter and level converter 5 of Fig. 1 is shown in detail. This converter provides the possibility, to couple the software reset signal of the control circuit 3 to the hardware reset signal of the reset circuit 4. It requires only one transistor stage with a transistor T1, which operates with a 5V supply voltage, and which is arranged as a grounded-emitter circuit. The grounded-emitter circuit provides the required logic conversion from signal "high" to signal "low" in case of a software reset. During normal operation, the output voltage at output A of the transistor stage T1 is 5V, which is then decoupled via the blocking diode D1 of Figure 1 for not-disturbing the "high" signal of reset circuit 4, necessary for the normal operation of the key controller 1 and therefore of the appliance.

## Claims

1. Appliance comprising a microcontroller (2), a key controller (1) and a reset circuit (4) for providing a hardware reset, **characterized in that** the appliance comprises a further reset circuit for a software reset, which resets the microcontroller (1) as well as the key controller (2) in case of a malfunction of the key controller (1).

2. Appliance according to claim 1, **characterized in that** the appliance comprises signal processing circuits for digital video and digital audio contents, which are also reset in case of a malfunction of the key controller (1) .

3. Appliance according to claim 1 or 2, **characterized in that** the appliance comprises further a power supply (10), which provides supply voltages for a standby-mode (5VE) and a normal mode (SWITCH-Voltages) of the appliance, and that for a software reset the supply voltages for the normal mode (SWITCH-Voltages) are switched off and on by a control circuit (3).

4. Appliance according to claim 1, 2 or 3, **characterized in that** the reset circuit (4) for the hardware reset provides only a reset for the control circuit (3), which provides in a next step a reset for the remaining digital signal processing circuits.

5. Appliance according to one of the claim 3 or 4, **characterized in that** an inverter and a level converter (13) is arranged between the control circuit (3) and the key controller (1).

6. Appliance according to one of the claims 1 to 5, **characterized in that** the appliance is a DVD recorder or a personal video recorder for recording and replaying digital video recordings on a hard disc, an optical storage medium or a similar recording device.
